# EUROPÄISCHE PATENTANMELDUNG

(11) **EP 4 622 040 A1**
(43) Veröffentlichungstag der Anmeldung: **24.09.2025**
(21) Anmeldenummer: 24164853.4
(22) Anmeldetag: 20.03.2024
(51) Int. Cl.: H02J 3/38

(54) **VERFAHREN ZUM REGULIEREN EINES ELEKTRISCHEN ENERGIE-VERSORGUNGS-NETZES, ELEKTRISCHES ENERGIE-VERSORGUNGS-NETZ MIT REGELUNGS-VORRICHTUNG SOWIE REGELUNGS-VORRICHTUNG FÜR DAS ELEKTRISCHE ENERGIE-VERSORGUNGS-NETZ**

(71) Anmelder: Siemens Aktiengesellschaft, 80333 München (DE)
(72) Erfinder: Duckheim, Mathias, 91052 Erlangen (DE); Werner, Thomas, 91126 Rednitzhembach (DE)
(74) Vertreter: Siemens Patent Attorneys

(57) **Zusammenfassung**

Die Erfindung betrifft ein elektrisches Versorgungs-Netz, das mindestens ein hierarchisch übergeordnetes Teil-Netz mit übergeordnetem Spannungs-Niveau und mindestens ein mit dem hierarchisch übergeordneten Teil-Netz elektrisch gekoppeltes, hierarchisch untergeordnetes Teil-Netz mit einem im Vergleich zum übergeordneten Spannungs-Niveau niedrigeren, untergeordneten Spannungs-Niveau aufweist. Das Verfahren umfasst folgende Verfahrensschritte:
a) Erfassen eines aktuellen Werts eines elektrischen Parameters des hierarchisch übergeordneten Teil-Netzes,
b) Schätzen eines aktuellen Zustands des hierarchisch untergeordneten Teil-Netzes unter Verwendung des Werts des aktuellen elektrischen Parameters des hierarchisch übergeordneten Teil-Netzes und unter Verwendung eines für das hierarchisch untergeordnete Teil-Netz bereitgestellten, KI-basierten Maschinen-Lern-Modells und
c) Regulieren des elektrischen Energie-Versorgungs-Netzes unter Verwendung des geschätzten, aktuellen Zustands des hierarchisch untergeordneten Teil-Netzes.

## Beschreibung

Die Erfindung betrifft ein Verfahren zum Regulieren eines elektrischen Energie-Versorgungs-Netzes, ein elektrisches Energie-Versorgungs-Netz mit Regelungs-Vorrichtung sowie eine Regelungs-Vorrichtung für das elektrische Energie-Versorgungs-Netz.

Ein elektrisches Energie-Versorgungnetz (Energie-Versorgungs-Netzwerk) ist in der Regel kaskadiert aufgebaut, d.h. es weist verschiedene, elektrisch miteinander verbundene (gekoppelte) Spannungs-Ebenen auf. So besteht ein Energie-Versorgungs-Netz beispielsweise aus einem Hochspannungs-Teil-Netz mit einem Spannungs-Niveau von über 110 kV, einem Mittelspannungs-Teil-Netz mit einem Spannungs-Niveau zwischen 1 kV und 110 kV und einem Niederspannungs-Teil-Netz mit einem Spannungs-Niveau von unter 1 kV. Durch den zunehmenden Einsatz von dezentralen Erzeugern elektrischer Energie (z.B. Photovoltaik-Anlagen, Biogas-Anlagen oder Windkraft-Anlagen) und von dezentralen Speichern elektrischer Energie sowie von neuen elektrischen Verbrauchern (z.B. Wärmepumpen und Elektrofahrzeuge) werden die Vorgänge in Niederspannungs-Teil-Netzen dynamischer. Es kann davon ausgegangen werden, dass zur Einhaltung von zulässigen Spannungs-Grenzen sowie von thermischen Strom-Belastungen von elektrischen Kabeln in Zukunft auch die Niederspanungs-Teil-Netze überwacht und reguliert werden müssen. Für das Überwachen bzw. für das Regulieren eines Niederspannungs-Teil-Netzes wird beispielsweise ein Zustand des Niederspannungs-Teil-Netzes zur Vorbereitung von Gegen-Maßnahmen geschätzt (State Estimation). Ein derartiges Verfahren ist beispielsweise aus der EP 3 107 174 B1 bekannt.

Aufgrund der großen Anzahl von Betriebs-Mitteln (Netz-Komponenten) ist es allerdings wirtschaftlich nicht sinnvoll, ein Niederspannungs-Teil-Netz flächendeckend mit Sensoren auszustatten, um eine für die Zustands-Schätzung notwendige Daten-Basis zu schaffen und entsprechende Modelle für eine algorithmische Lastfluss-Berechnung für das Niederspannungs-Teil-Netz zu pflegen.

Aufgabe der vorliegenden Erfindung ist es, ein automatisches Überwachen und automatisches Regulieren eines kaskadierten elektrischen Energie-Versorgungs-Netzes zu ermöglichen, wobei möglichst wenig Sensoren für das Erfassen von elektrischen Größen zum Einsatz kommen sollen.

Zur Lösung der Aufgabe wird ein Verfahren zum Regulieren eines elektrischen Energie-Versorgungs-Netzes angegeben. Das elektrische Versorgungs-Netz weist mindestens ein hierarchisch übergeordnetes Teil-Netz mit übergeordnetem Spannungs-Niveau und mindestens ein mit dem hierarchisch übergeordneten Teil-Netz elektrisch gekoppeltes, hierarchisch untergeordnetes Teil-Netz mit einem im Vergleich zum übergeordneten Spannungs-Niveau niedrigeren, untergeordneten Spannungs-Niveau auf. Das Verfahren umfasst folgende Verfahrensschritte:
a) Erfassen eines aktuellen Werts eines elektrischen Parameters des hierarchisch übergeordneten Teil-Netzes,
b) Schätzen eines aktuellen Zustands des hierarchisch untergeordneten Teil-Netzes unter Verwendung des Werts des aktuellen elektrischen Parameters des hierarchisch übergeordneten Teil-Netzes und unter Verwendung eines für das hierarchisch untergeordnete Teil-Netz bereitgestellten, KI-basierten Maschinen-Lern-Modells und
c) Regulieren des elektrischen Energie-Versorgungs-Netzes unter Verwendung des geschätzten, aktuellen Zustands des hierarchisch untergeordneten Teil-Netzes.

Zur Lösung der Aufgabe wird auch ein elektrisches Energie-Versorgungs-Netz angegeben, das mindestens ein hierarchisch übergeordnetes Teil-Netz mit übergeordnetem Spannungs-Niveau, mindestens ein mit dem hierarchisch übergeordneten Teil-Netz elektrisch gekoppeltes, hierarchisch untergeordnetes Teil-Netz mit einem im Vergleich zum übergeordneten Spannungs-Niveau niedrigeren untergeordneten Spannungs-Niveau und mindestens eine Regelungs-Vorrichtung zum Durchführen des Verfahrens aufweist.

Zur Lösung der Aufgabe wird darüber hinaus eine Regelungs-Vorrichtung für das elektrische Energie-Versorgungs-Netz zum Durchführen des Verfahrens angegeben. Zum Regulieren des elektrischen Energie-Versorgungs-Netzes wird mindestens ein Steuer-Signal zum Ansteuern mindestens einer elektrischen Komponente des elektrischen Energie-Versorgungs-Netzes verwendet. Für das Regulieren des elektrischen Energie-Versorgungs-Werks ist eine entsprechende Regulierungs- bzw. Steuerungs-Einrichtung vorhanden.

Das elektrische Energie-Versorgungs-Netz weist eine zentrale oder eine dezentrale Regelungs-Vorrichtung auf. Die Regelungs-Vorrichtung ist mit mindestens einem Sensor-Element zum

Erfassen des aktuellen elektrischen Parameters des hierarchisch übergeordneten Teil-Netzwerks und mindestens einem Regelungs-Element zum Regulieren des elektrischen Energie-Versorgungs-Netzwerks ausgestattet.

Das zu regulierende elektrische Energie-Versorgungs-Netz bzw. die Teil-Netze des zu regulierenden elektrischen Energie-Versorgungs-Netzes weisen Verbraucher elektrischer Energie (elektrische Lasten) und/oder Erzeuger elektrischer Energie (Energie-Quellen) auf.

Die grundlegende Idee der Erfindung ist es, mit Hilfe zumindest einer Quasi-Echtzeitmessung zumindest einer elektrischen Größe (Erfassen eines aktuellen Werts) mindesten eines elektrischen Parameters) des hierarchisch übergeordneten Teil-Netzes (z.B. Mittelspannungs-Netz) und mit Hilfe eines Maschinen-Lern-Verfahrens für das hierarchisch untergeordnete Teil-Netz (z.B. Niederspannungs-Netz) eine Zustands-Schätzung für das hierarchisch untergeordnete Teil-Netz durchzuführen. Zur Zustands-Schätzung des hierarchisch untergeordneten Teil-Netzes wird ein KI-basiertes Maschinen-Lern-Verfahren eingesetzt. Für die Zustands-Schätzung sind dabei Quasi-Echtzeitmessungen aus dem hierarchisch untergeordnetem Teil-Netz nicht erforderlich. In diesem Zusammenhang wird unter Quasi-Echtzeitmessung im Übrigen eine Messung des elektrischen Parameters innerhalb eines festgelegten Zeitintervalls, z.B. innerhalb weniger Millisekunden, verstanden.

Für das Bereitstellen des KI-basierten Maschinen-Lern-Modells wird dabei auf Informationen aus intelligenten Mess-Systemen und/oder aus bereitgestellten Cloud-Systemen zurückgegriffen. Dabei ist es nicht erforderlich, dass diese Informationen in Quasi-Echtzeit vorliegen, denn sie werden nur zum Training des Maschinenlern-Verfahrens benötigt. Gleichwohl können Quasi-Echtzeit-Messungen der Informationen zu einer Erhöhung einer Güte der Zustands-Schätzung führen.

Die Verwendung von Quasi-Echtzeitmessungen aus den Cloud-Systemen der Hersteller ist prinzipiell nicht erforderlich. Die Benutzung dieser Quasi-Echtzeit-Messungen erhöht aber die Güte der Zustands-Schätzung.

Der Zustand des untergeordneten Teil-Netzes umfasst beispielsweise Knoten-Spannungen oder Zweig-Ströme im untergeordneten Teil-Netz. Für die Schätzung wird ein Maschinen-Lern-Modell verwendet, das auf einer künstlichen Intelligenz (Kl, artificial intelligence) beruht. Gemäß einer besonderen Ausgestaltung wird für das KI-basierte Maschinen-Lern-Modell ein künstliches neuronales Netz verwendet. Ein künstliches neuronales Netz weist eine informations-technische Struktur auf, die einen funktionalen Zusammenhang zwischen einem Eingangs-Signal und einem Ausgangs-Signal "erlernen" kann. Ein künstliches neuronales Netz besteht dabei aus mehreren künstlichen Neuronen, die untereinander verbunden sind.

Im Rahmen des Maschinen-Lern-Modells können verschiedenste elektrische Größen (Variable) erlernt werden. In einer besonderen Ausgestaltung wird für das Maschinen-Lern-Modell zumindest eine aus der Gruppe archivierte Wirk-Leistung des hierarchisch untergeordneten Teil-Netze und archivierte Blind-Leistung einer Einspeisung von Strom in das hierarchisch untergeordnete Teil-Netz als zu trainierende Ausgangs-Variable verwendet.

In einer weiteren besonderen Ausgestaltung umfasst das Schätzen des aktuellen Zustands des hierarchisch untergeordneten Teil-Netzes ein Schätzen mindestens einer Knoten-Spannung im untergeordneten Teil-Netz und/oder ein Schätzen mindestens eines Zweig-Stroms im untergeordneten Teil-Netz.

Der zu erfassende elektrische Parameter des übergeordneten Teil-Netzes kann ebenfalls eine beliebige elektrische Größe sein, beispielsweise ein elektrisches Potential an einem beliebigen Knoten-Punkt des übergeordneten Teil-Netzes. Zum Beispiel wird als elektrischer Parameter ein elektrisches Knoten-Potential an einem Knoten-Punkt zum hierarchisch untergeordneten Teil-Netzes verwendet. Dieser Knoten-Punkt zum hierarchisch untergeordneten Teil-Netz wird z.B. von einem Transformator gebildet.

Vorzugsweise werden als elektrischer Parameter des hierarchisch übergeordneten Teil-Netzes Abgänge eines Umspann-Werks des hierarchisch übergeordneten Teil-Netzes verwendet. Die Abgänge können beispielsweise die Abgänge in einem Mittelspannungs-Netz zu einem Niederspannungs-Netz oder zu einem Hochspannungs-Netz betreffen.

Als elektrischer Parameter könnte beispielsweise auch ein Zweig- oder Abgangs-Strom des übergeordneten Teil-Netzes verwendet werden. Dafür zusätzliche Mess-Stationen sind dafür nicht notwendig, da das Erfassen der Abgangs-Ströme durch dort installierten Schutz-Geräte sowieso erfolgt.

Als hierarchisch über- bzw.- untergeordnete Teil-Netze des elektrischen Versorgungs-Netzes können Teil-Netze mit unterschiedlichen Spannungs-Niveaus eingesetzt werden. Insbesondere wird als hierarchisch übergeordnetes Teil-Netz ein Hochspannungs-Netz (High Voltage-, HV-Netz) mit einem übergeordneten Spannungs-Niveau von über oder gleich 110 kV oder ein Mittelspannungs-Netz (Medium Voltage-, MV-Netz) mit einem aus dem Bereich von 1 kV bis 110 kV ausgewählten, übergeordneten Spannungs-Niveau verwendet. Als einzige Messung könnte beispielsweise lediglich eine Strom- und Spannungs-Messung in den Abgängen eines entsprechenden HV-MV-Umspann-Werkes als zu erfassender aktueller Wert des elektrischen Parameters des hierarchisch übergeordneten Teil-Netzes verwendet werden.

Dem Spannungs-Niveau des hierarchisch übergeordneten Teil-Netzes entsprechend wird dann als hierarchisch untergeordnetes Teil-Netz ein Mittelspannungs-Netz mit einem aus dem Bereich von 1 kV bis 110 kV ausgewählten, untergeordneten Spannungs-Niveau oder ein Niederspannungs-Netz (Low Voltage, LV-Netz) mit einem untergeordneten Spannungs-Niveau von unter 1 kV verwendet.

Vorzugsweise wird als Maschinen-Lern-Modell ein probabilistisches Maschinen-Lern-Modell verwendet. Für das probabilistische Maschinen-Lern-Modell wird vorzugweise ein neuronales Netz (probabilistischen Neuronales Netz, PNN) verwendet. Ein PNN ist ein spezieller Ansatz im Bereich des maschinellen Lernens, der darauf abzielt, die Unsicherheit bei Vorhersagen und Entscheidungen zu modellieren. PNNs ermöglichen die Schätzung von Wahrscheinlichkeiten unter Berücksichtigung von Unsicherheiten. Insbesondere wird für das probabilistische Maschinen-Lern-Modell ein künstliches neuronales Netz in Form eines Bayesschen neuronalen Netzes verwendet. Hier werden für die Schätzung des Zustands des untergeordneten Teil-Netzes zusätzlich zum aktuellen Wert des elektrischen Parameters des übergeordneten Teil-Netzes vorhandene, historische Werte des zu schätzenden Zustands des untergeordneten Teil-Netzes versendet.

Insbesondere wird zum Schätzen des aktuellen Zustands des hierarchisch untergeordneten Teil-Netzes zusätzlich mindestens ein exogener Faktor des elektrischen Energie-Versorgungs-Netzes verwendet. Der exogene Faktor ist eine physikalische Größe, die das gesamte elektrische Energie-Versorgungs-Netz oder zumindest eines der Teil-Netze betrifft. Vom exogenen Faktor ist das Energie-Versorgungs-Netz bzw. das entsprechende Teil-Netz nicht direkt, sondern indirekt betroffen. Man kann den exogenen Faktor als "netzfremden" Faktor bezeichnen, der den Zustand des Energie-Versorgungs-Netzes bzw. die Zustände der Teil-Netze beeinflusst. Vorzugswiese wird daher der exogene Faktor aus der Gruppe aktuellen Daten und/oder archivierten Daten ausgewählt.

In einer besonderen Ausgestaltung wird als exogener Faktor zumindest eine aus der Gruppe Temperatur des elektrischen Energie-Versorgungs-Netzes, eine Bedeckung mindestens einer elektrischen Komponente des elektrischen Energie-Versorgungs-Netzes, eine Kalender-Information und Zeit-Information ausgewählte Variable verwendet.

Als besonders vorteilhaft erweist es sich, als elektrischen Parameter des hierarchisch übergeordneten Teil-Netzes einen Strom-Wert zu verwenden, der in einem Kurzschluss-Anzeiger des hierarchisch übergeordneten Teil-Netzes gemessen wird. Somit wird auf eine bereits vorhandene Mess-Station zurückgegriffen. Eine zusätzliche Mess-Station (bzw. ein zusätzliches Sensor-Element) ist nicht notwendig.

Zusammenfassend sind folgende Vorteile der Erfindung hervorzuheben:
- Für die Schätzung des Zustandes im hierarchisch untergeordneten Teil-Netz werden keine Quasi-Echtzeitmessungen im hierarchisch untergeordneten Teil-Netz benötigt.
- Da Messungen im hierarchisch untergeordneten Teil-Netz nicht durchgeführt werden müssen, sinken die Kosten für die Zustands-Schätzung des hierarchisch untergeordneten Teil-Netzes erheblich. So werden keine zusätzlichen Geräte benötigt und es entfällt der Aufwand für die Installation und Inbetriebsetzung.
- Das vorgeschlagene Verfahren erlaubt einen schnellen flächendeckenden Einsatz, insbesondere dann, wenn die Maschinenlern-Verfahren zur Zustands-Schätzung des hierarchisch untergeordneten Teil-Netzes in einem Zentral-System erfolgt, z.B. als Teil eines Netzleit-Systems oder einen Niederspannungsmanagementsystems
- Das Verfahren greift auf vorhandene Mess-Informationen und Daten-Modelle zurück.
- Das Verfahren berücksichtigt stets topologische Veränderungen im hierarchisch untergeordneten Teil-Netz, die sich zum Beispiel durch Schaltmaßnahmen im hierarchisch untergeordneten Teil-Netz (z.B. Orts-Netz) ergeben
- Strukturelle Veränderungen im hierarchisch untergeordneten Teil-Netz, z.B. durch zusätzliche Erzeuger oder Verbraucher, betreffen das KI-basierten Maschinen-Lern-Modell. Es muss lediglich ein Nachtrainieren des Maschinen-Lern-Modells durchgeführt werden.
- Das Verfahren kann flexibel verschiedene Arten von Messungen, z.B. von Fehlerstromindikatoren, mit einer Steigerung der Schätzgenauigkeit, erübrigen

Im Folgenden wird die Erfindung anhand mehrer Ausführungsbeispiele und der dazugehörigen Figuren näher beschrieben. Die Figuren sind schematisch und stellen keine maßstabsgetreue Abbildung dar.

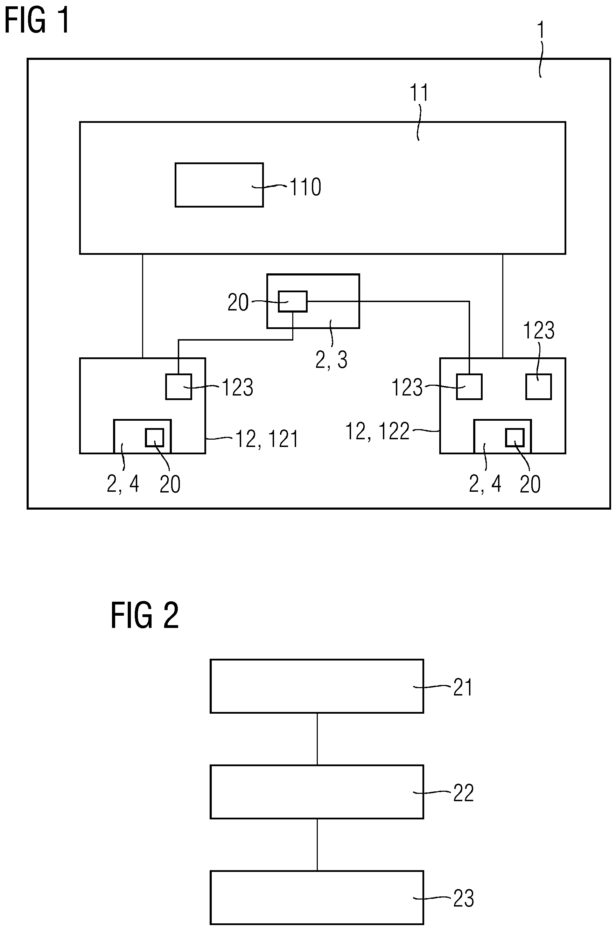

Figur 1 zeigt ein elektrisches Energie-Versorgungs-Netz.

Figur 2 zeigt ein Verfahren zum Regulieren des elektrischen Energie-Versorgungs-Netz.

Gegeben ist ein kaskadiertes Energie-Versorgungs-Netz 1 mit einem hierarchisch übergeordneten Teil-Netz 11 in Form eines Mittelspannungs-Netzes mit einem Spannungs-Niveau von ca. 110 kV und mit mehreren, hierarchisch untergeordneten Teil-Netzen 12 bzw. 121 und 122 in Form von Niederspannungs-Netzen mit jeweils einem Spannungs-Niveau von bis zu 1 kV.

Das Energie-Versorgungs-Netz 1 weist eine Regelungs-Vorrichtung 2 mit einem Regelungs-Element 21 zum Regulieren des elektrischen Energie-Versorgungs-Netzwerks 1 auf.

Zum Regulieren des elektrischen Energie-Versorgungs-Netzes wird wie folgt vorgegangen:
a) Erfassen eines aktuellen Werts eines elektrischen Parameters des hierarchisch übergeordneten Teil-Netzes 11,
b) Schätzen eines aktuellen Zustands der hierarchisch untergeordneten Teil-Netze 121 und 122 unter Verwendung des Werts des aktuellen elektrischen Parameters des hierarchisch übergeordneten Teil-Netzes 11 und unter Verwendung eines für das hierarchisch untergeordnete Teil-Netz 11 bereitgestellten, KI-basierten Maschinen-Lern-Modells und
c) Regulieren des elektrischen Energie-Versorgungs-Netzes 1 unter Verwendung der geschätzten, aktuellen Zustände der hierarchisch untergeordneten Teil-Netze 121 und 122.

Das Erfassen des eines aktuellen Werts des Mittelspannungs-Netzes erfolgt über ein Sensor-Element 110. Das Sensor-Element verfügt z.B. über ein Spannungs-Messgerät zum Erfassen einer Knoten-Spannung im Mittelspannungs-Netz oder über einen Stromzähler zum Erfassen des Werts eines Zweig-Stroms im Mittelspannungs-Netz.

Zum Regulieren des elektrischen Energie-Versorgungs-Netzes 1 werden mit Hilfe einer Regelungs-Einrichtung 20 Steuer-Signale zum Ansteuern von elektrischen Komponenten 123 des elektrischen Energie-Versorgungs-Netzes 1, z.B. der Niederspannungs-Netze 121 und 122 erzeugt. Die Regelungs-Einrichtung 2 verfügt über ein Regelungs-Element 20 und kann eine zentrale Steuer-Einrichtung 3 für den gesamten Netz-Abschnitt oder dezentrale SteuerEinrichtungen für Teile des Netz-Abschnitts (z.B. für die Niederspannungs-Netze 121 und 121) aufweisen.

Gemäß einer ersten Ausführungsform wird in folgenden zwei Schritten vorgegangen:
In einem ersten, vorgelagerten Schritt wird für jedes der Niederspannungs-Netze 120 und 121 des Energie-Versorgungs-Netzes 1 ein Maschinen-Lern-Modell zur knotenspezifischen Schätzung von Einspeisungen und Entnahmen erzeugt.

Für das Schätzen wird ein KI-basiertes Maschinen-Lern-Modell verwendet, das mit Hilfe eines künstlichen Neuronalen Netzes realisiert wird.

Als Eingangs-Daten für das Trainieren des Maschinen-Lern-Modells werden folgende Daten (Faktoren) verwendet:
a) Exogene Variablen wie Temperatur, Bedeckung einer Komponente eines der Niederspannungs-Netze, Kalender-Informationen Uhrzeiten.
b) Strom- und Spannungs-Messungen aus dem Mittelspannungs-Netz. Hier werden Quasi-Echtzeitmessungen in den Abgängen eines Umspann-Werks vom HochSpannungs-Netz zum Mittel-Spannungs-Netz verwendet.

Als zugehörige zu trainierende Ausgangs-Variablen dienen archivierte Wirk- und Blindleistungen der Einspeisungen (z.B. PV-Anlagen) sowie archivierte Wirk- und Blindleistungen der Entnahmen (z.B. Haushalte oder Ladeeinrichtungen für Elektrofahrzeuge). Die archivierten Werte stammen beispielsweise aus intelligenten Mess-Systemen (z.B. Smart Meter) oder aus einem Cloud-System, das beispielsweise von einem Anlagen-Hersteller vorgehalten wird, um Betriebs-Daten der Anlagen aufzunehmen

Als Ergebnis des ersten Schrittes liegt eine Maschinen-Lern-Modell vor, dass bei vorgebebenen aktuellen exogenen Variablen (Wetter, Zeit etc.) und den in a) und b) genannten aktuellen Mess-Werten die aktuellen Einspeisungen und Entnahmen an denjenigen Knoten des Niederspannungs-Netzes schätzt, deren Daten nur asynchron bereitgestellt werden und die deshalb für eine Quasi-Echtzeitverarbeitung nicht zur Verfügung stehen
In einem zweiten Schritt wird auf der Basis der geschätzten Einspeisungen und Entnahmen ein Zustands-Schätzung für den vollständigen Netz-Abschnitt bestehend aus Mittelspannungs-Ring bzw. -abzweig und Niederspannungs-Netze berechnet.

Die aktuellen Mess-Informationen und die aktuellen, exogenen Variablen werden zunächst in das in das oben beschriebene Maschinenlern-Modell eingebracht, das daraus die Einspeisungen bzw. Entnahmen in den Niederspannungs-Netzen schätzt. Diese Abschätzungen werden zusammen mit den aktuellen Mess-Informationen an eine Zustands-Schätzung (State-Estimation) gegeben, die mit Hilfe des Netz-Modelles des Verteil-Netz-Abschnittes die Schätzungen für die Knoten-Spannungen sowie die Zweig-Ströme der Niederspannungs-Netze berechnet.

Eine weitere Variante des Verfahrens nutzt einen einzelnen KI-Modellblock, um direkt die Zustandsgrößen zu schätzen (ohne den Zwischenschritt der Schätzung der Einspeisungen und Entnahmen). In diesem Fall werden im Training des Modells die gleichen Ausgangs-Variablen wie in der obigen Variante verwendet. Als Targets werden sowohl archivierte Zustandsgrößen wie Spannungen als auch aus archivierten Größen mit einem Netzmodell berechnete Größen wie Zweig- und Abgangs-Ströme auf der Niederspannungsseite berechnet.

Im Betrieb des Verfahrens wird das so trainierte KI-Modell dann auf den entsprechenden aktuellen Inputs ausgewertet und liefert dann Schätzer für die elektrischen Zielgrößen (Target-Größen).

Eine weitere Option besteht in der Verwendung eine probabilistischen Maschinen-Lern-Modells, das auch Unsicherheitsschätzungen angeben kann, z.B. einem Bayesschen neuronalen Netz. Es wird ein Bayessches Zustands-Schätzungsverfahren angewendet. Mittels historisch (offline) verfügbarer Daten wird dabei eine Wahrscheinlichkeits-Verteilung der Lasten und Erzeugungen im Netz parametriert. Über das Netz-Modell wird dann eine Prioverteilung des Netz-Zustandes berechnet und, mit Verfügbarwerden der Quasi-Echtzeitmessungen, wird dann über das Bayessche Theorem die Posteriorverteilung von Zuständen berechnet.

## Patentansprüche

1. Verfahren zum Regulieren eines elektrischen Energie-Versorgungs-Netzes (1), das mindestens ein hierarchisch übergeordnetes Teil-Netz (11) mit übergeordnetem Spannungs-Niveau und mindestens ein mit dem hierarchisch übergeordneten Teil-Netz (11) elektrisch gekoppeltes, hierarchisch untergeordnetes Teil-Netz (12) mit einem im Vergleich zum übergeordneten Spannungs-Niveau niedrigeren, untergeordneten Spannungs-Niveau aufweist, mit folgenden Verfahrensschritten:
a) Erfassen (21) eines aktuellen Werts eines elektrischen Parameters des hierarchisch übergeordneten Teil-Netzes (11),
b) Schätzen (22) eines aktuellen Zustands des hierarchisch untergeordneten Teil-Netzes (12) unter Verwendung des Werts des aktuellen elektrischen Parameters des hierarchisch übergeordneten Teil-Netzes (11) und unter Verwendung eines für das hierarchisch untergeordnete Teil-Netz (11) bereitgestellten, KI-basierten Maschinen-Lern-Modells und
c) Regulieren (23) des elektrischen Energie-Versorgungs-Netzes (1) unter Verwendung des geschätzten, aktuellen Zustands des hierarchisch untergeordneten Teil-Netzes (12).

2. Verfahren nach Anspruch 1, wobei für das KI-basierte Maschinen-Lern-Modell ein künstliches neuronales Netz verwendet wird.

3. Verfahren nach Anspruch 1 oder 2, wobei für das Maschinen-Lern-Modell zumindest eine aus der Gruppe archivierte Wirk-Leistung des hierarchisch untergeordneten Teil-Netzes und archivierte Blind-Leistung einer Einspeisung von Strom in das hierarchisch untergeordnete Teil-Netz als zu trainierende Ausgangs-Variable verwendet wird.

4. Verfahren nach einem der Ansprüche 1 bis 3 wobei das Schätzen des aktuellen Zustands des hierarchisch untergeordneten Teil-Netzes (12) ein Schätzen mindestens einer Knoten-Spannung im untergeordneten Teil-Netz (12) und/oder ein Schätzen mindestens eines Zweig-Stroms im untergeordneten Teil-Netz (12) umfasst.

5. Verfahren nach einem der Ansprüche 1 bis 4 wobei als elektrischer Parameter des übergeordneten Teil-Netzes (11) ein elektrisches Knoten-Potential an einem Knoten-Punkt zum hierarchisch untergeordneten Teil-Netzes (12) verwendet wird.

6. Verfahren nach einem der Ansprüche 1 bis 5, wobei als hierarchisch übergeordnetes Teil-Netz (11) ein Hochspannungs-Netz mit einem übergeordneten Spannungs-Niveau von über 110 kV oder ein Mittelspannungs-Netz mit einem aus dem Bereich von 1 kV bis 110 kV ausgewählten, übergeordneten Spannungs-Niveau verwendet wird.

7. Verfahren nach einem der Ansprüche 1 bis 6, wobei als hierarchisch untergeordnetes Teil-Netz ein Mittelspannungs-Netz mit einem aus dem Bereich von 1 kV bis 110 kV ausgewählten, untergeordneten Spannungs-Niveau oder ein Niederspannungs-Netz mit einem untergeordneten Spannungs-Niveau von unter 1 kV verwendet werden.

8. Verfahren nach einem der Ansprüche 1 bis 7, wobei als Maschinen-Lern-Modell ein probabilistisches Maschinen-Lern-Modell verwendet wird.

9. Verfahren nach Anspruch 8, wobei für das probabilistisches Maschinen-Lern-Modell ein künstliches neuronales Netz in Form eines Bayesschen neuronalen Netzes verwendet wird.

10. Verfahren nach einem der Ansprüche 1 bis 9, wobei zum Schätzen des aktuellen Zustands des hierarchisch untergeordneten Teil-Netzes (12) zusätzlich mindestens ein exogener Faktor des elektrischen Energie-Versorgungs-Netzes (1) verwendet wird.

11. Verfahren nach Anspruch 10, wobei der exogene Faktor aus der Gruppe aktuellen Daten und/oder archivierten Daten ausgewählt wird.

12. Verfahren nach Anspruch 10 oder 11, wobei als exogener Faktor zumindest eine aus der Gruppe Temperatur des elektrischen Energie-Versorgungs-Netzes, eine Bedeckung mindestens einer elektrischen Komponente des elektrischen Energie-Versorgungs-Netzes (1), eine Kalender-Information und Zeit-Information ausgewählte Variable verwendet wird.

13. Verfahren nach einem der Ansprüche 1 bis 12, wobei als elektrischer Parameter des hierarchisch übergeordneten Teil-Netzes (12) Abgänge eines Umspann-Werks des hierarchisch übergeordneten Teil-Netzes (12) verwendet werden.

14. Verfahren nach einem der Ansprüche 1 bis 13, wobei als elektrischer Parameter des hierarchisch übergeordneten Teil-Netzes (11) ein Strom-Wert verwendet wird, der in einem Kurzschluss-Anzeiger des hierarchisch übergeordneten Teil-Netzes (11) gemessen wird.

15. Verfahren nach einem der Ansprüche 1 bis 14, wobei zum Regulieren des elektrischen Energie-Versorgungs-Netzes (1) mindestens ein Steuer-Signal zum Ansteuern mindestens einer elektrischen Komponente des elektrischen Energie-Versorgungs-Netzes (1) verwendet wird.

16. Elektrisches Energie-Versorgungs-Netz (1), das
- mindestens ein hierarchisch übergeordnetes Teil-Netz (11) mit übergeordnetem Spannungs-Niveau,
- mindestens ein mit dem hierarchisch übergeordneten Teil-Netz (11) elektrisch gekoppeltes, hierarchisch untergeordnetes Teil-Netz (12) mit einem im Vergleich zum übergeordneten Spannungs-Niveau niedrigeren, untergeordneten Spannungs-Niveau und
- mindestens eine Regelungs-Vorrichtung (2) zum Durchführen eines Verfahrens nach einem der Ansprüche 1 bis 15 aufweist.

17. Regelungs-Vorrichtung (2) für ein elektrisches Energie-Versorgungs-Netz (1) nach Anspruch 16 zum Durchführen eines Verfahrens nach einem der Ansprüche 1 bis 15 mit
- mindestens einem Sensor-Element (110) zum Erfassen des aktuellen elektrischen Parameters des hierarchisch übergeordneten Teil-Netzwerks (11) und
- mindestens einem Regelungs-Element (111) zum Regulieren des elektrischen Energie-Versorgungs-Netzwerks (1).
